# EUROPEAN PATENT APPLICATION

(11) **EP 1 890 223 A2**
(43) Date of publication of application: **20.02.2008**
(21) Application number: 07112134.7
(22) Date of filing: 10.07.2007
(51) Int. Cl.: G06F 3/048

(54) **Device and method for scrolling through list in portable terminal with touch pad**

(30) Priority: 16.08.2006 KR 20060077316
(71) Applicant: Samsung Electronics Co., Ltd., Suwon-si Gyeonggi-do (KR)
(72) Inventor: Lim, Dok Shin, Yeongtong-gu, Suwon-si Gyeonggi-do (KR); Park, Won Joo, Yeongtong-gu, Suwon-si Gyeonggi-do (KR); Lim, Wan Soo, Yeongtong-gu, Suwon-si Gyeonggi-do (KR)
(74) Representative: Grünecker, Kinkeldey, Stockmair & Schwanhäusser Anwaltssozietät

(57) **Abstract**

A device and method for displaying a list in a portable terminal having a touch pad are provided. The portable terminal includes an input unit for generating a sweep event; a speed-determining unit for checking speed of the sweep event and setting a scroll speed corresponding to the speed of the sweep event; a controller for controlling scrolling through items on a list according to the scroll speed; and a display for displaying the scrolled items on the list under the control of the controller. Therefore, the list scroll can be easily performed according to the inputted sweep event.

## Description

### BACKGROUND OF THE INVENTION

### 1. Field of the Invention

The present invention relates to a mobile communication terminal, and more particularly, to a device and method for displaying a list in a portable terminal with a touch pad.

### 2. Description of the Related Art

Recently, portable terminals have been equipped with various functions to improve convenience, and more functions have been added to the portable terminals to comply with users' demands. As such, through the addition of a plurality of functions to the portable terminal, a number of items corresponding to functions to be displayed has increased. However, since the size of a display of a mobile terminal is limited, a user must input a plurality of keys to select a specific item. Also, although a conventional portable terminal has a touch pad, a user must perform a plurality of touching operations to select a specific item.

In addition, when a specific file is searched in a portable terminal storing a plurality of files (for example, audio files), a user must repeat a plurality of inputting operations. When a portable terminal stores 100 audio files and the 99^{th} audio file is played, a user must repeat 99 key input operations. Also, when such 99^{th} audio file is played through a portable terminal with a touch pad storing 100 audio files, the user must repeat 99 touch operations.

Therefore, technology for rapidly and easily scrolling through a list of a plurality of items in a portable terminal needs to be developed.

### SUMMARY OF THE INVENTION

In order to solve the above problems, the present invention provides a device and method for rapidly scrolling through a list in a portable terminal with a touch pad.

The present invention provides a device and method for rapidly scrolling through a list in response to a speed of a sweep event input to a portable terminal with a touch pad.

In accordance with an aspect of the present invention, there is provided a portable terminal that includes an input unit having a touch pad, for generating a sweep event of the touch pad; a speed-determining unit for checking a speed of the sweep event and setting a scroll speed corresponding to the speed of the sweep event; a controller for controlling a scrolling through of items on a list according to the scroll speed; and a display for displaying the scrolled items on the list under the control of the controller.

In accordance with another aspect of the present invention, there is provided a method for scrolling through a list of a portable terminal. The method includes checking whether a sweep event occurs in a touch pad; checking a speed of the sweep event and setting a scroll speed in response to the speed of the sweep event; and scrolling through items on the list in response to the scroll speed.

### BRIEF DESCRIPTION OF THE DRAWINGS

The above and other features and advantages of the present invention will be more apparent from the following detailed description in conjunction with the accompanying drawings, in which:
FIG. 1 is a schematic block diagram illustrating a portable terminal according to the present invention;
FIG. 2 is a flow chart describing a method for scrolling through a list of a portable terminal according to a first embodiment of the present invention;
FIG. 3 is a flow chart describing a method for checking a speed of the sweep event of FIG. 2;
FIG. 4 is a flow chart describing a method for scrolling though a list of a portable terminal according to a second embodiment of the present invention;
FIG. 5 is a flow chart describing a method for checking a speed of the sweep event of FIG. 4;
FIGS. 6A to 6C are views illustrating an exemplary example of a method for scrolling through a list of a portable terminal;
FIGS. 7A to 7C are views illustrating another exemplary example of a method for scrolling through a list of a portable terminal; and
FIGS. 8A to 8C are views illustrating another exemplary example of a method for scrolling through a list of a portable terminal.

### DETAILED DESCRIPTION OF PREFERRED EMBODIMENTS

Hereinafter, embodiments of the present invention are described in detail with reference to the accompanying drawings. In the drawings, the same or similar elements are denoted by the same reference numerals even though they are depicted in different drawings.

Prior to explaining the embodiments of the present invention, terms will be defined for the present description below:

A list is configured to include one or more items.

A sweep event refers to an event generated as more than two sensors of a touch pad of a portable terminal detect successive touches.

A contact state refers to a state where a touch pad of a portable terminal is detecting a user's touch.

Although the present invention describes a portable terminal with a touch pad, it will be easily appreciated to those skilled in the art that the present invention can be applied to other devices having a touch pad.

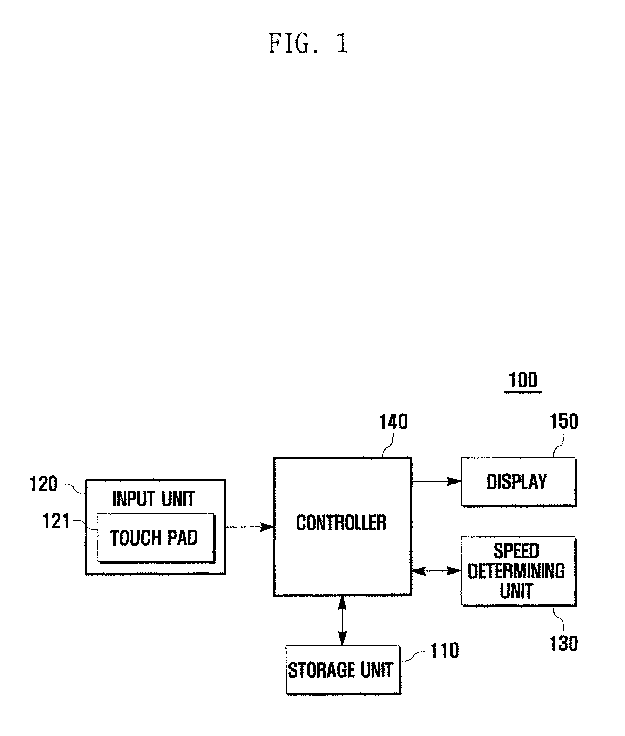

FIG. 1 is a schematic block diagram illustrating a portable terminal according to the present invention.

The portable terminal 100 includes a storage unit 110, an input unit 120, a speed-determining unit 130, a controller 140, and a display 150.

The storage unit 110 is configured to include a program memory for storing programs that drive the portable terminal 100 and a data memory for storing data. The data memory is configured to include at least one of a volatile memory and a non-volatile memory. The storing unit 110 stores a plurality of lists having at least one or more items, which are received from outside of the portable terminal 100. For example, the received items include audio files, image files, etc. Also, the storing unit 110 stores a list including at least one or more items created by a user. For example, the items created by the user may include edited memorandums, photograph files, etc.

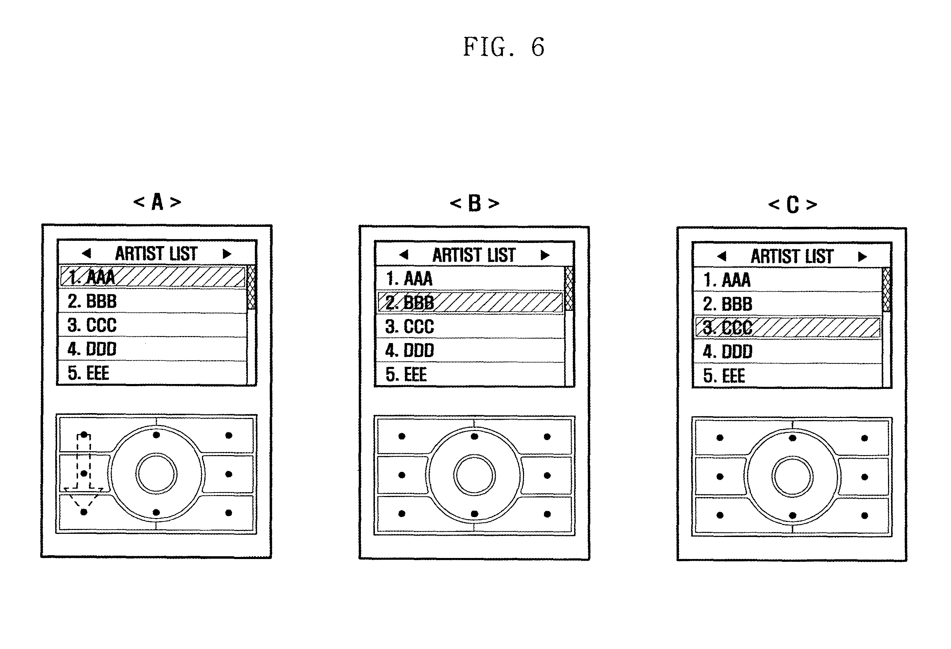

The input unit 120 is implemented by various units, such as a key pad, a touch screen, or a touch pad, etc. The input unit 120 serves to select a certain function and to input information by a user. The input unit 120 is preferably implemented by a touch pad 121. The touch pad 121 is configured to include a sensor that detects a pressure or a change of a physical quantity (for example, resistance, capacitance, etc.) according to user's touch. Specifically, when detecting a user's touch, the touch pad 121 outputs a control signal to the controller 140. Here, the touch pad 121 is preferably configured to include two or more sensors. For example, the touch pad 121 is configured to include 9 sensors, as shown in FIGS. 6A to 8C.

In the present invention, a case where a touch signal is generated by two sensors in the touch pad 121 is defined as a "sweep event." The sweep event serves as a signal to scroll through items on the list.

The speed-determining unit 130 checks the direction and speed of the sweep event. In particular, the speed-determining unit 120 measures distance and consuming time between touched sensors to calculate speed of the sweep event. Then, the speed-determining unit 130 sets a scroll speed in response to the calculated speed of the sweep event and a scroll direction in response to the direction of the sweep event. For example, the direction of the sweep event is set to one of following directions: right to left, left to right, up to down, or down to up.

The controller 140 scrolls through items on a list based on the set scroll speed. The controller 140 accelerates the scroll speed of the items to a certain speed and then decelerates to stop scrolling through the items. Also, the controller 140 may scroll through the items on the list at a constant speed and then stop scrolling.

For example, when the calculated speed of the sweep event is less than a 1^{st} speed (for example, 3cm/sec), the speed-determining unit 130 sets the scroll speed to a low speed. When the scroll speed is set to the low speed, the controller 140 sequentially scrolls two items on a list for two seconds and then stops scrolling through the two items.

When the calculated speed of the sweep event is greater than or equal to the 1^{st} speed and less than a 2^{nd} speed (for example, 6cm/sec), the speed-determining unit 130 sets the scroll speed to a middle speed. When the scroll speed is set to the middle speed, the controller 140 sequentially scrolls four items on a list for two seconds and then stops scrolling through the four items.

When the calculated speed of the sweep event is greater than or equal to the 2^{nd} speed, the speed-determining unit 130 sets the scroll speed to a high speed. When the scroll speed is set to the high speed, the controller 140 sequentially scrolls eight items on a list for two seconds and then stops scrolling through the eight items.

Also, the controller 140 scrolls the items on the list at a scroll speed corresponding to the calculated speed of the sweep event. When detecting a touch signal during the scrolling through of the items, the controller 140 stops scrolling through the items on the list.

For example, when a calculated input speed is less than a 1^{st} speed, the speed-determining unit 130 sets the scroll speed to a low speed. When the scroll speed is set to the low speed, the controller successively scrolls through the items on the list at the low speed. When a touch signal is detected during the successive scrolling, the controller 140 stops the scrolling.

When the calculated input speed is greater than or equal to the 1^{st} speed and less than a 2^{nd} speed, the speed-determining unit 130 sets the scroll speed to a middle speed. When the scroll speed is set to the middle speed, the controller successively scrolls through the items on the list at the middle speed. When a touch signal is detected during the successive scrolling, the controller 140 stops the scrolling.

When the calculated input speed is greater than or equal to the 2^{nd} speed, the speed-determining unit 130 sets the scroll speed to a high speed. When the scroll speed is set to the high speed, the controller successively scrolls through the items on the list at the high speed. When a touch signal is detected during the successive scrolling, the controller 140 stops the scrolling.

The controller 140 controls all the states and operations of the portable terminal 100, and may be implemented by a microprocessor or a Digital Signal Processor (DSP), etc. In particular, the controller 140 controls the scrolling through of the items on the list in response to the scroll speed checked by the speed-determining unit 130. That is, the controller 140 controls the scrolling through of the items according to the scroll speed set by the speed-determining unit 130. For example, while scrolling through the items on the list, when a preset time lapses, the controller 140 stops scrolling through the items. Here, the preset time refers to a time that is previously set to stop scrolling through a list when the portable terminal is manufactured. In addition, the controller 140 may be operated in such a way that it stops scrolling through a list, when detecting a touch signal.

The display 150 displays states and operations of the portable terminal 100. In particular, the display 150 displays items on the list under the control of the controller 140. For example, the display 150 highlights a specific item on the list.

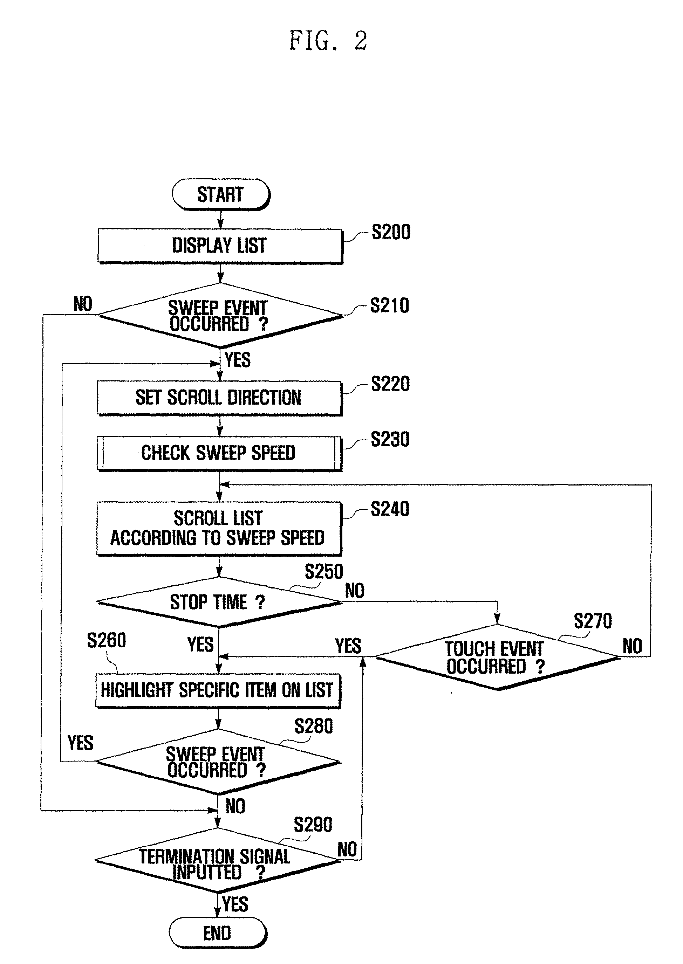

FIG. 2 is a flow chart describing a method for scrolling through a list of a portable terminal according to a first embodiment of the present invention.

Referring to FIGS. 1 and 2, when a menu including one or more items is selected, the controller 140 displays the one or more items on the display 150, in a list format, in step S200. For example, when a menu of a picture storing box of sub menus of camera functions is selected, the controller 140 displays previously stored photograph files on the display in a list format.

While displaying the list, the controller 140 determines whether a sweep event for scrolling though items on the list has occurred in the input unit 120, in step S210. Here, a case where a touch signal is generated by two or more sensors from the touch pad 121 of the input unit 120 is defined as a sweep event. Such a sweep event serves as a signal to scroll through a list in an embodiment of the present invention.

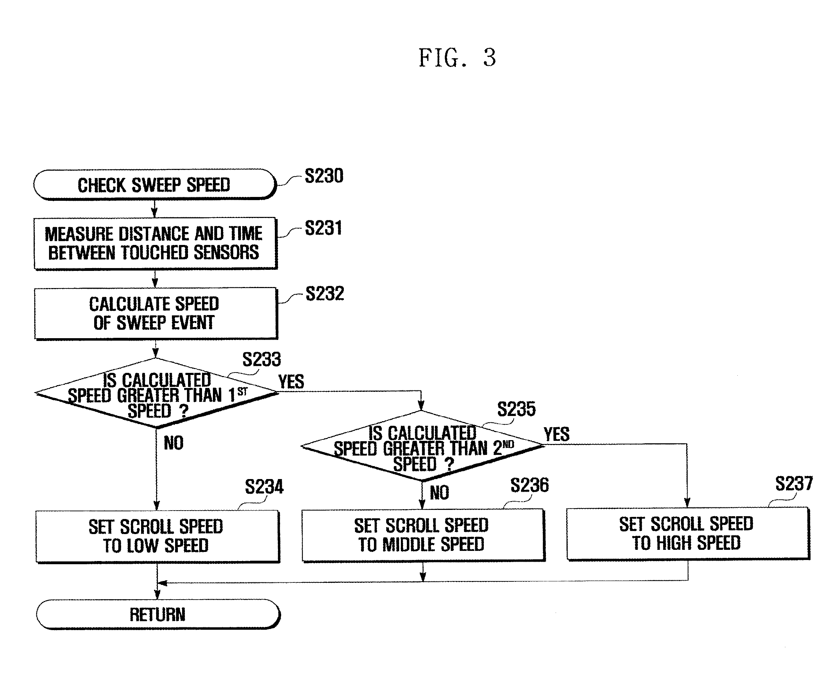

When the determination in step S210 is positive, or the sweep event has occurred, the controller 140 controls the speed-determining unit 130 to set a scroll direction in response to the direction of the sweep event, in step S220. For example, the direction of the sweep event is one of the following directions: right to left, left to right, up to down, and down to up. The controller 140 controls the speed-determining unit 130 to check the speed of the sweep event and then set the scroll speed, in step S230, which will be described in detail later with reference to FIG. 3.

The controller 140 scrolls through the items on the list in the scroll direction set in S220 at the scroll speed set in S230, in step S240. While performing step S240, the controller 140 checks whether a preset time for stopping the scroll lapses, in step S250. When the preset time has lapsed, the controller 140 stops scrolling through the items on the list and controls the display 150 to highlight a specific item on the list, in step S260.

Meanwhile, when the preset time has not lapsed, the controller 140 checks whether a touch signal is detected, in step S270. When the touch signal is not detected, the controller 140 scrolls through the items on the list according to step S240.

On the other hand, when the touch signal is detected, the controller 140 stops scrolling through the items on the list and highlights a specific item on the list, as described in step S260.

After highlighting the specific item, the controller 140 determines whether a sweep event has occurred, in step S280. When the determination of S280 is positive, or the sweep event is detected, the controller 140 proceeds to step S220.

On the other hand, when the determination of S280 is negative, or the sweep event is not detected, the controller 140 checks whether a termination signal is inputted, in step S290. When the termination signal is not inputted, the controller 140 displays the specific item on the list in step S260.

FIG. 3 is a flow chart describing a method for checking a speed of the sweep event of FIG. 2.

Referring to FIGS. 1 and 3, the controller 140 controls the speed-determining unit 130 to measure distance and consumption time between the touched sensors of the touch pad 121, in step S231. Then, the controller 140 calculates a speed of the sweep event, based on the measured distance and consumption time, in step S232. The speed-determining unit 130 checks whether the calculated speed of the sweep event is equal to or greater than a 1^{st} speed, in step S233. When the measured speed of the sweep event is less than the 1^{st} speed, the speed-determining unit 130 sets the scroll speed to a low speed, in step S234.

When the scroll speed is set to the low speed, the controller 140 accelerates the scroll speed until reaching one second after the inputting of the sweep event, and decelerates the scroll speed after the one second, thereby sequentially scrolling through two items for two seconds.

Such a scrolling method is illustrated in FIG. 6A. When an item '1. AAA' on the list is highlighted, the direction of the sweep event inputted to the touch pad 121 is the up to down direction. When the scroll speed is set to a low speed from the speed of the generated sweep event, as shown in FIG. 6B, the items on the list are scrolled in such a way that the highlight is sequentially moved from the item '1. AAA' to an item '2. BBB' after one second. Then, as shown in FIG. 6C, the items on the list are scrolled in such a way that the highlight is sequentially moved from the item '2. BBB' to an item '3. CCC' after 2 seconds, and then the scrolling is terminated.

However, when the measured speed of the sweep event is greater than or equal to the 1^{st} speed, the speed-determining unit 130 checks whether the measured speed of the sweep event greater than or is equal to a 2^{nd} speed, in step S235. When the measured speed of the sweep event is greater than or equal to the 1^{st} speed and less than the 2^{nd} speed, the speed-determining unit 130 sets the scroll speed to a middle speed, in step S236.

When the scroll speed is set to the middle speed, the controller 140 accelerates the scroll speed until reaching one second after the inputting the sweep event, and then decelerates the scroll speed after the one second, thereby sequentially scrolling through four items for two seconds.

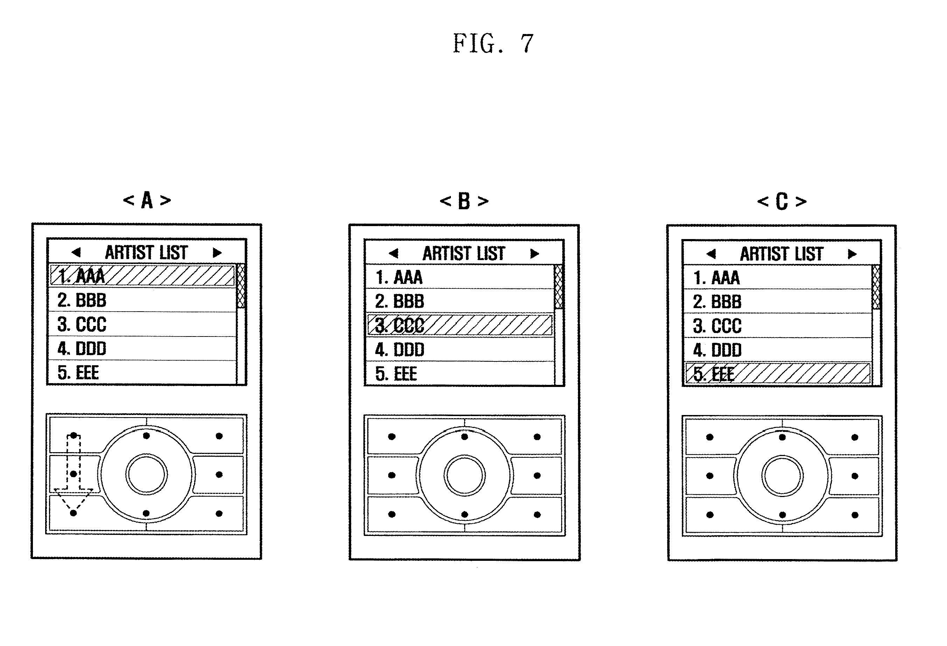

Such a scrolling method is illustrated in FIG. 7A. When an item '1. AAA' on the list is highlighted, the direction of the sweep event generated in the touch pad 121 is the up to down direction. When the scroll speed is set to a middle speed from the speed of the generated sweep event, as shown in FIG. 7B, the items on the list are scrolled in such a way that the highlight is sequentially moved from the item '1. AAA' to an item '3. CCC' after one second. Then, as shown in FIG. 7C, the items on the list are scrolled in such a way that the highlight is moved from the item '3. CCC' to an item '5. EEE' after 2 seconds, and then the scroll is terminated.

As well, when the measured speed of the sweep event is greater than or equal to 2^{nd} speed, the speed-determining unit 130 sets the scroll speed to a high speed, in step S237.

When the scroll speed is set to the high speed, the controller 140 accelerates the scroll speed until reaching one second after the inputting of the sweep event, and then decelerates the scroll speed after the one second, thereby sequentially scrolling through eight items for two seconds.

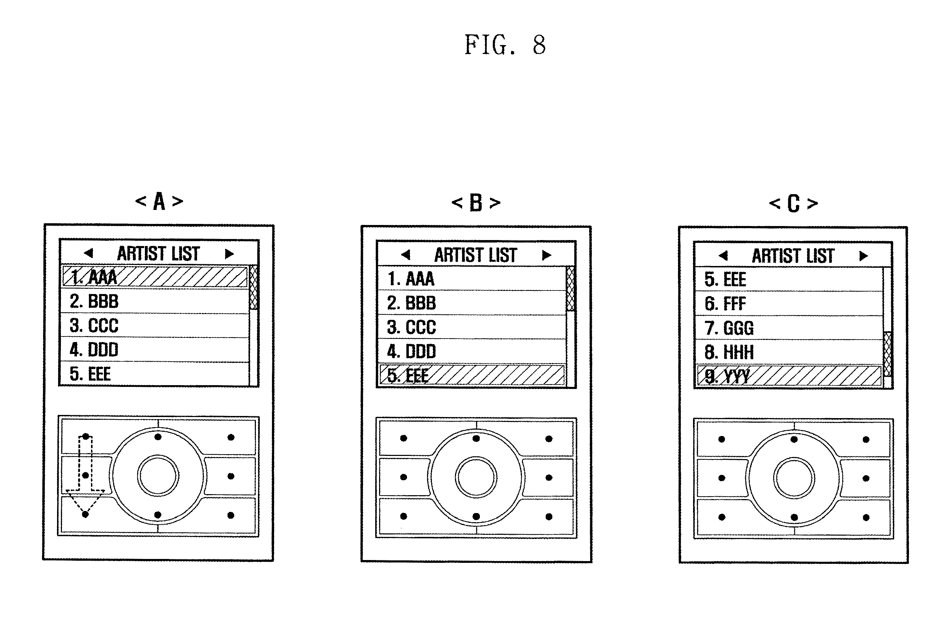

Such a scrolling method is illustrated in FIG. 8A. When an item '1. AAA' on the list is highlighted, the direction of the sweep event generated in the touch pad 121 is the up to down direction. When the scroll speed is set to a high speed from the speed of the generated sweep event, as shown in FIG. 8B, the items on the list are scrolled in such a way that the highlight is sequentially moved from the item '1. AAA' to an item '5. EEE' after one second. Then, as shown in FIG. 8C, the items on the list are scrolled in such a way that the highlight is moved from the item '5. EEE' to an item '9. YYY' after two seconds, and then the scroll is terminated.

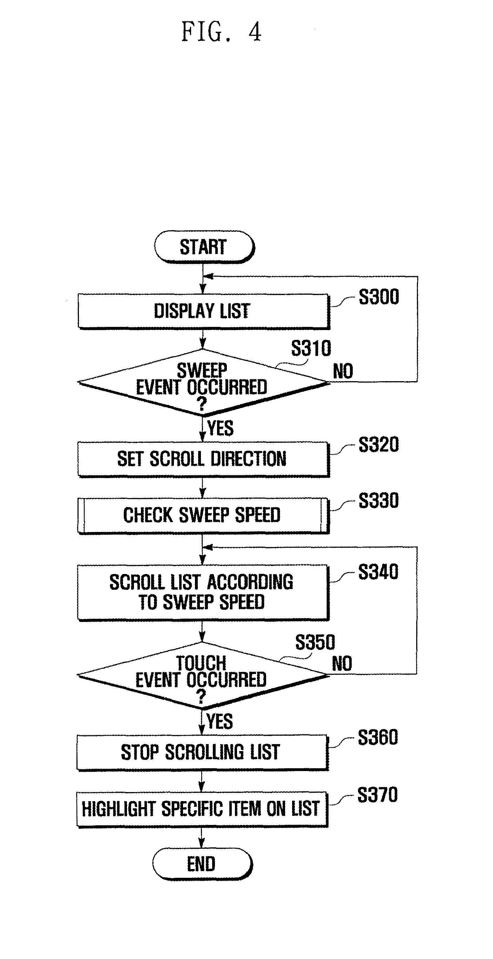

FIG. 4 is a flow chart describing a method for scrolling through a list of a portable terminal according to a second embodiment of the present invention.

Referring to FIGS. 1 and 4, when a menu including one or more items is selected, the controller 140 displays the one or more items on the display 150 in a list format, in step S300.

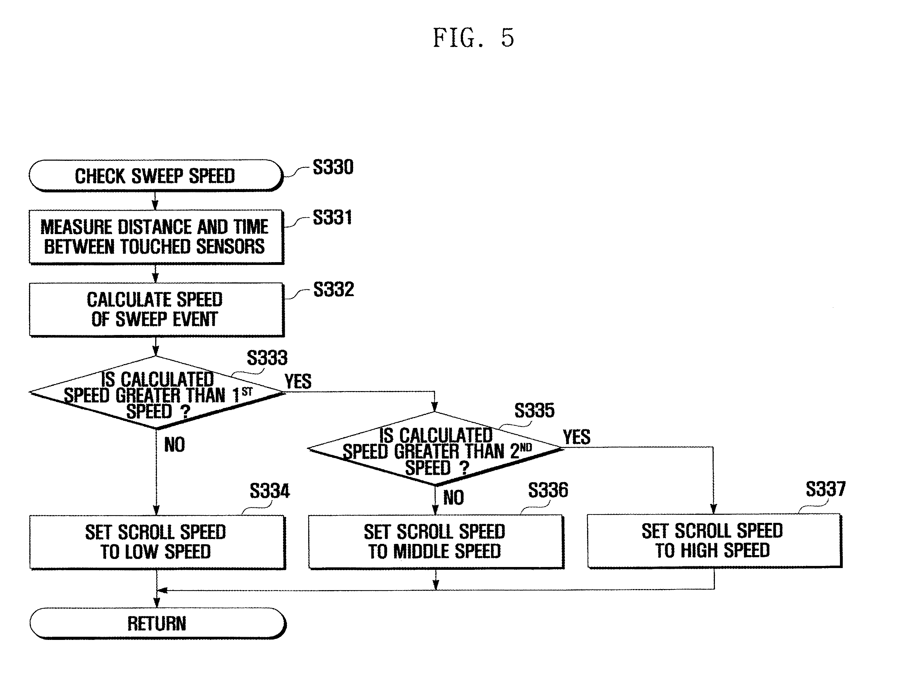

While displaying the list, the controller 140 determines whether a sweep event for scrolling through items on the list has occurred, in step S310. When the determination in step S310 is positive, the controller 140 controls the speed-determining unit 130 to set a scroll direction in response to the direction of the sweep event, in step S320. Here, the scroll direction is one of the following directions: right to left, left to right, up to down, and down to up. In addition, the controller 140 controls the speed-determining unit 130 to check the speed of the sweep event and to set the scroll speed, in step S330. Here, the detailed description of S330 will be done with reference to FIG. 5, further below.

The controller 140 scrolls the items on the list in the scroll direction set by step S320, based on the scroll speed set by step S330, in step S340. Then, the controller 140 determines whether a touch signal is detected, in step S350. When the determination of S350 is positive, the controller 140 stops the scrolling through of items of list, in step S360, and highlights a specific item on the list, in step S370. On the other hand, when the determination in step S350 is negative, the controller 140 proceeds to step S340 to scroll through the items on the list.

FIG. 5 is a flow chart describing a method for checking a speed of the sweep event of FIG. 4.

Referring to FIGS. 1 and 5, the controller 140 controls the speed-determining unit 130 to measure distance and consumption time between the touched sensors of the touch pad 121, in step S331. Then, the controller 140 calculates a speed of the sweep event based on the measured distance and consumption time, in step S332. The speed-determining unit 130 checks whether the calculated speed of the sweep event is greater than or equal to a 1^{st} speed, in step S333. When the measured speed of the sweep event is less than the 1^{st} speed, the speed-determining unit 130 sets the scroll speed to a low speed, in step 334. For example, when the scroll speed is set to a low speed, the controller 140 sequentially scrolls the items on the list at the low speed until a touch signal is detected.

On the other hand, when the measured speed of the sweep event is greater than or equal to the 1^{st} speed, the speed-determining unit 130 checks whether the measured speed of the sweep event is greater than or equal to 2^{nd} speed, in step S335. When the measured speed of the sweep event is less than the 2^{nd} speed, the speed-determining unit 130 sets the scroll speed to a middle speed, in step S236. When the scroll speed is set to the middle speed, the controller 140 sequentially scrolls the items on the list at the middle speed until a touch signal is detected.

As well, when the measured speed of the sweep event is equal to or greater than the 2^{nd} speed, the speed-determining unit 130 sets the scroll speed to a high speed, in step S237. When the scroll speed is set to the high speed, the controller 140 sequentially scrolls the items on the list at the high speed until a touch signal is detected.

As described in the foregoing, the mobile communication terminal and method according to the present invention allows items of list to be easily scrolled based on one sweep event, while a user inputs the sweep events in the portable terminal. Therefore, the user can easily and rapidly access a desired item on the list.

In addition, the mobile communication terminal and method according to the present invention allows items of list to be scrolled at various speeds according to the speeds of sweep events that a user inputs in the portable terminal. Therefore, the user can easily and rapidly access a desired item on the list.

While the present invention has been particularly shown and described with reference to embodiments thereof, it will be understood by those of ordinary skill in the art that various changes in form and details may be made therein without departing from the spirit and scope of the present invention as defined by the following claims.

## Claims

1. A portable terminal comprising:
an input unit having a touch pad, for generating a sweep event of the touch pad;
a speed-determining unit for checking a speed of the sweep event and setting a scroll speed corresponding to the speed of the sweep event;
a controller for controlling a scrolling through of items on a list according to the scroll speed; and
a display for displaying the scrolled items on the list under the control of the controller.

2. The portable terminal of claim 1, wherein the controller stops the scrolling through of the items when a preset time elapses.

3. The portable terminal of claim 1, wherein:
the touch pad comprises two or more sensors; and
the sweep event is generated when at least two sensors output touch signals in a contact state.

4. The portable terminal of claim 3, wherein the speed-determining unit checks a direction of the sweep event and sets a scroll direction in response to the direction of the sweep event.

5. The portable terminal of claim 4, wherein the scroll speed is a constant speed.

6. The portable terminal of claim 4, wherein the scroll speed is accelerated to a certain speed and then decelerated.

7. The portable terminal of claim 1, wherein the controller stops the scrolling through of the items when a touch signal is detected while scrolling through the items on the list.

8. The portable terminal of claim 1, wherein the display highlights a specific item on the list.

9. A method for scrolling through a list of a portable terminal comprising:
checking whether a sweep event occurs in a touch pad;
checking a speed of the sweep event and setting a scroll speed in response to the speed of the sweep event; and
scrolling through items on the list in response to the scroll speed.

10. The method of claim 9, further comprising:
stopping the scrolling through of the items when a preset time elapses, while scrolling through the list.

11. The method of claim 9, wherein:
the touch pad comprises two or more sensors; and
the sweep event is generated when at least two sensors output touch signals in a contacting state.

12. The method of claim 11, wherein the setting the speed of the sweep event comprises:
checking a direction of the sweep event; and
setting a scroll direction in response to the direction of the sweep event.

13. The method of claim 12, wherein the scroll speed is a constant speed.

14. The method of claim 12, wherein the scroll speed is accelerated to a certain speed and then decelerated.

15. The method of claim 9, wherein the scrolling through of the items on the list is stopped when a touch signal is detected.

16. The method of claim 9, wherein the scrolling through of the items on the list comprises highlighting a specific item on the items on the list.
